## Europäisches Patentamt
## European Patent Office
## Office européen des brevets

(19)

(11) Veröffentlichungsnummer : **0 424 376 B1**

(12) # EUROPÄISCHE PATENTSCHRIFT

(45) Veröffentlichungstag der Patentschrift :
07.04.93 Patentblatt 93/14

(51) Int. Cl.$^5$ : **H01B 3/04, H01B 3/40**

(21) Anmeldenummer : 88909991.7

(22) Anmeldetag : 28.11.88

(86) Internationale Anmeldenummer :
PCT/DE88/00742

(87) Internationale Veröffentlichungsnummer :
WO 90/00802 25.01.90 Gazette 90/03

(54) ISOLIERBAND ZUR HERSTELLUNG EINER MIT EINER HEISSHÄRTENDEN EPOXIDHARZ-SÄUREANHYDRID-MISCHUNG IMPRÄGNIERTEN ISOLIERHÜLSE FÜR ELEKTRISCHE LEITER.

(30) Priorität : 14.07.88 DE 3824254

(43) Veröffentlichungstag der Anmeldung :
02.05.91 Patentblatt 91/18

(45) Bekanntmachung des Hinweises auf die
Patenterteilung :
07.04.93 Patentblatt 93/14

(84) Benannte Vertragsstaaten :
AT BE CH DE FR GB IT LI NL SE

(56) Entgegenhaltungen :
EP-A- 0 073 736
EP-A- 0 132 748
EP-A- 0 149 971
CH-A- 538 179
DE-A- 2 916 954

(56) Entgegenhaltungen :
DE-C- 2 142 571
GB-A- 2 077 271
SE-B- 367 885
US-A- 4 265 966
US-A- 4 427 740

(73) Patentinhaber : SIEMENS
AKTIENGESELLSCHAFT
Wittelsbacherplatz 2
W-8000 München 2 (DE)

(72) Erfinder : IHLEIN, Walter
Glockenturmstrasse 36
W-1000 Berlin 19 (DE)
Erfinder : POLLMEIER, Franz-Josef
Krottnaurerstrasse 10 c
W-1000 Berlin 38 (DE)
Erfinder : ROGLER, Wolfgang
Frankenstrasse 44
W-8521 Möhrendorf (DE)

EP 0 424 376 B1

**Beschreibung**

Die Erfindung betrifft ein Isolierband zur Herstellung einer mit einer heißhärtenden Epoxidharz-Säureanhydridhärter-Mischung imprägnierten Isolierhülse für elektrische Leiter, insbesondere für die Wicklungsstäbe bzw. Spulen elektrischer Maschinen, bestehend aus auf eine flexible Unterlage aufgebrachtem, flächigem, durchschlagfestem anorganischem Material, wie z. B. Glimmerplättchen oder Feinglimmerschichten, das mit der Unterlage und miteinander und gegebenenfalls mit einer abschließenden Decklage mittels eines Bindemittels verklebt ist, das einen die Härtungsreaktion des Tränkharzgemisches anregenden Beschleuniger enthält, wobei die Bindemittel-BeschleunigerMischung ein bei der Aushärtetemperatur des Tränkharzes selbsthärtendes System bildet.

Ein derartiges Isolierband, wie es aus der DE-PS 21 42 571 bekannt ist, ermöglicht die wirtschaftliche Durchführung der Tränkung, weil eine reaktionsträge Tränkharzmischung verwendet werden kann, die auch bei den eine gute Durchimprägnierung der Isolierhülse gewährleistenden hohen Tränktemperaturen praktisch keiner Veränderung der Viskosität unterliegt. Dies ist erforderlich, weil jeweils nur ein geringer Anteil der als Tränkharz verwendeten Epoxidharz-Säureanhydrid-Mischung in die Isolierhülse eindrinat, während der Rest wieder für neue Tränkungen verwendet werden muß. Das Isolierband enthält deshalb einen die Härtungsreaktion des Tränkharzgemisches anregenden Beschleuniger , damit der in die Isolierhülse eingedrungene Tränkharzanteil in wirtschaftlich vertretbarer Zeit ausgehärtet.

Damit die Isolierbänder vor der Tränkung lange gelagert werden können, ist bei dem bekannten Isolierband die Bindemittel-beschleuniger-Mischung so gewählt, daß bei Raumtemperatur praktisch keine Härtung dieser Mischung eintritt. Außerdem bildet die Bindemittel-Beschleuniger-Mischung ein selbsthärtendes System, das allerdings erst bei den wesentlich über Raumtemperatur liegenden Aushärtetemperaturen des Tränkharzes selbsthärtet. Dadurch wird vermieden, daß zwischen großflächigen Schichten des durchschlagfesten anorganischen Materials eingedrungenes Bindemittel, das nicht vollständig vom Tränkharz resorbiert werden konnte, ungehärtet in der Isolierung verbleibt.

Bei dem bekannten Isolierband werden als Bindemittel cycloaliphatische Epoxidharze mit einem Äquivalentgewicht unter 180 verwendet, bei denen die Epoxidgruppen durch Sauerstoffanlagerungen an ringständige Doppelbindungen entstanden sind. Diese zeigen, wie allgemein bekannt, mit Aminhärtern bzw. Beschleunigern keine bzw. eine stark verzögerte Reaktion. bei Zusatz des Epoxidharz-Säureanhydrid-Tränkharzes entwickeln diese Beschleuniger jedoch ihre volle katalytische Aktivität. Als Beschleuniger enthält das bekannte Isolierband Addukte aus Vinylcyclohexendioxid und sekundären Aminen im Molverhältnis 1:1, bei denen das sekundäre Stickstoffatom ein Glied eines hydrierten Ringsystems ist, und Addukten des Vinylcyclohexendioxids und in 1-Stellung nicht substituierten Imidazolen in Molverhältnis 1:1.

Neuere Untersuchungen haben nun aber gezeigt, daß Vinylcyclohexendioxid (4-Vinyl-1.2. cyclohexendiepoxid) als gesundheitsschädlicher Arbeitsstoff anzusehen ist, da er im Tierversuch krebserzeugende Wirkungen zeigte.

Ähnliches gilt nach Einstufung vom Hersteller auch für das cycloaliphatische Epoxidharz 3(3′,4′-Epoxicyclohexyl)-7,8-epoxi 2.4-dioxa-spirobicyclo-⌊5,5⌋-undecan (Epoxidäquivalent ca. 162).

Ferner sind aus der DE-A-29 16 954 Isoliermassen bekannt, bestehend aus einem durch Molekülvergrößerung modifiziertem Epoxidharz mit einem Epoxidäquivalent von über 200 und einem anorganischen pulverförmigen Füllstoff wie z. B. Climmer. Diese Isoliermassen enthalten außerdem Säureanhydridhärter sowie Amine als Beschleuniger wie z. B. N-Amino-äthylpiperazin. Die bekannte Isoliermasse wird zum Einbetten von Halbleiterteilen vergossen oder spritzgußtechnisch verarbeitet.

Es ist weiterhin aus der EP-A-149 971 bekannt, Isoliermassen zum Beschichten elektrischer Leiter auf Basis von durch Molekülvergrößerungen modifiziertem ringepoxidiertem cycloaliphatischem Epoxidharz zu verwenden.

Der Erfindung liegt daher die Aufgabe zugrunde, für Isolierbänder der eingangs beschriebenen Art ein Bindemittel-beschleunigersystem zu schaffen, das nach allen bisher bekannten Untersuchungen physiologisch unbedenklich ist.

Zur Lösung dieser Aufgabe sind bei dem Isolierband der eingangs beschriebenen Art gemäß der Erfindung als Bindemittel ein physiologisch unbedenkliches, ringepoxidiertes, durch Molekülvergrößerung modifiziertes, cycloaliphatisches Epoxidharz mit einem Epoxidäquivalent größer als 200 und als Beschleuniger Addukte aus 1-Ethyl-piperazin oder 1-Methyl-piperazin an (Meth)acrylatverbindungen verwendet.

Ein gemäß der Erfindung aufgebautes Isolierband kann bei Raumtemperaturen bis zu mehr als drei Monate ohne Veränderung seiner Eigenschaften gelagert werden. Andererseits bewirken die Piperazinaddukte jedoch, daß die Gelierung einer Epoxidharz-Säureanhydridmischung bereits bei Temperaturen um 60 °C angeregt und wesentlich beschleunigt wird, so daß es möglich ist, den in die Isolierhülse eingedrungenen Tränkharzanteil in wirtschaftlich kurzer Zeit auszuhärten.

2

Ein wichtiger Vorteil für das gemäß der Erfindung dem Bindemittel zugesetzte Beschleunigersystem ist außer einer hohen Reaktivität gegenüber dem eindringenden Imprägnierharz bei gleichzeitiger geringer Reaktivität gegenüber dem Bindemittel ein äußerst geringer Dampfdruck im Temperaturbereich bis 80 °C, so daß unter den bedingungen der VPI-Technik (Vakuumdruckimprägnierung) nicht die Gefahr einer Infizierung der heißhärtenden Epoxidharz-Säureanhydridmischung durch Dämpfe bescheunigend und aktivierend wirkender Bestandteile aus der Bindemittel-Beschleuniger-Mischung auftreten kann.

Das so gegebene Bindemittel-beschleunigersystem bleibt mit Sicherheit unter den Bedingungen des Trocknens und Vorwärmens der aus den Isolierbändern gewickelten Isolierhülsen vor der Tränkung der Isolierungen voll im Tränkharz löslich, ohne einen Abfall in der Reaktivität gegenüber dem beim Tränkprozeß in die Isolierhülse eindringenden Tränkharz aufzuweisen.

Aus Reaktivitätsgründen empfiehlt es sich, für den Beschleuniger dem Umsetzungsprodukt aus 1 Mol Trimethylolpropantriacrylat und 3 Mol eines in 1-Stellung substituierten Piperazins, wie 1-Methylpiperazin oder 1-Ethylpiperazin den Vorzug zu geben.

Bei dem gemäß der Erfindung ausgebildeten Isolierband können als Bindemittel durch Molekülvergrößerung zu einem Epoxidäquivalent größer als 200 modifizierte ringepoxidierte cycloaliphatische Epoxidharze auf Basis von 3.4-Epoxicyclohexylmethyl-(3.4 Epoxi) cyclohexancarboxylat oder bis(3.4-epoxicyclohexylmethyl) adiapat eingesetzt werden. Die Modifizierung dieser beiden Harze ist jedoch unbedingt notwendig, da ohne Molekülvergrößerung bei einer Viskosität von ca. 350 m Pas/25 °C (Äquivalentgewicht 140) bzw. ca. 700 m Pas/25 °C (Äquivalentgewicht ca. 208) die Klebkraft dieser Harze zu gering wäre, um ein verarbeitbares, kaschiertes Band herstellen zu können. Um durch Molekülvergräßerung zu höherviskosen Verbindungen zu gelangen, bieten sich im wesentlichen folgende drei an sich bekannte Verfahren an:

a) Ionische Polymerisation mit Hilfe eines entsprechenden Beschleunigers

b) Die Addition von Anhydriden im Unterschuß, wobei die Molekülvergrößerung unter Bildung von Estergruppen erfolgt

c) Die Addition von insbesondere aromatischen Diolen unter Bildung von Aryl-Etherstrukturen (Advancementverfahren)

Besonders vorteilhafte Bindemittel der erfindungsgemäßen Isolierbänder sind nach dem Verfahren c) hergestellte Umsetzungsprodukte mit Bisphenol A und davon insbesondere die Additionsprodukte mit einem Epoxidäquivalent von ca. 250 für 3.4 Epoxicyclohexylmethyl- 3.4 Epoxy-cyclohexancarboxylat und von angenähert 500 für Bis(3.4 epoxicyclohexylmethyl)adiapat aufgrund ihrer hohen Viskosität und ausgezeichneten Klebkraft.

Als Katalysatoren für diese Umsetzung werden die aus dem Advancementverfahren (Vorverlängerungsverfahren) bekannten Verbindungsgruppen, wie quaternäre Ammoniumsalze, quaternäre Phosphoniumsalze, organische Phosphine etc. eingesetzt. Beispiele für derartige Katalysatorsysteme sind u. a. in den Patentschriften E-PS-0 099 334, US-PS-4 389 520 beschrieben. Im vorliegenden Fall bewährten sich Verbindungen wie Benzyltriethylammoniumchlorid und Benzyldimethyltetradecylammoniumchlorid.

Es empfiehlt sich, bei der Herstellung des Isolierbandes den Anteil an Bindemittel nicht zu hoch zu wählen, damit das Tränkharz bei der Imprägnierung gut in die im Band befindlichen Hohlräume eindringen kann. Der Gewichtsanteil der als Bindemittel zur Verklebung des Isolierbandes verwendeten Verbindungen kann deshalb etwa zwischen 3 und 20 %, bezogen auf das Gesamtgewicht des Isolierbandes, liegen. Bei einem solchen Anteil an Bindemittel kann die Menge des Beschleunigers etwa in der Größenordnung 0.05 bis 3 %, bezogen auf das Gesamtgewicht des Isolierbandes, festgesetzt werden. Die Menge des dem Isolierband bei der Herstellung zugesetzten Beschleunigers hängt davon ab, wieviel anorganisches Material, z. B. Glimmer, pro Unterlage das band enthält und wie hoch der Anteil des zur Verklebung verwendeten Bindemittels im Isolierband ist.

Eine weitere Verbesserung der aus Isolierbändern gemäß der Erfindung aufgebauten Isolierungen, die eine hohe Steifigkeit aufweisen, ist dadurch möglich, daß das Bindemittel-beschleuniger-Gemisch als Härter wirkende Beimengungen enthält, die erst bei Aushärtetemperaturen der heißhärtenden Epoxidharz-Säureanhydrid-Mischung wirksam werden. Dadurch wird die Wärmeformbeständigkeit des selbsthärtenden Bindemittels weiter erhöht. Diese Beimengungen beeinträchtigen jedoch nicht die Lagerfähigkeit des Isolierbandes. Auch dieses Bindemittel-BeschleunigerGemisch mit Beimengungen bleibt unter den Bedingungen des Trocknens und Vorwärmens vor der Tränkung der Isolierungen voll im Tränkharz löslich.

Besonders geeignet sind als Härter wirkende Beimengungen, die bis angenähert 80 °C im Bindemittel unlöslich sind und bezogen auf die Aushärtetemperatur einen genügend hohen Schmelzpunkt haben, wie z. B. das 2-Phenyl-4.5 Dihydroymethylimidazol. Derartige Beimengungen zeigen erst bei den Temperaturen der Aushärtung ihre Aktivität, während das Gelieren des in die Isolierhülse eindringenden Tränkharzes im Temperaturbereich um 60 °C durch das im Bindemittel ebenfalls vorhandene Piperazin-Trimethylolpropantriacrylat-Adukt angeregt wird.

Als Beimengungen sind ferner Komplexverbindungen oder Addukte geeignet, die erst bei den Temperaturen der Aushärtung in härtewirksame Komponenten zerfallen. Dies sind Verbindungen, wie sie in der DE-OS-28 11 764 beschrieben sind, oder Salze der Trimellitsäure mit Imidazolen, wie z. B. 1-Cyanoethyl-2-Methylimidazol-Trimellitat.

Es ist ferner zweckmäßig, als Beimengungen eingekapselte oder an Stoffen mit großer aktiver Oberfläche adsorbierte Härtersysteme zu verwenden, die erst bei Aushärtetemperatur oder durch Austausch mit anderen Verbindungen freigegeben und wirksam werden. So können z. b. in Molekularsieben adsorbierte tertiäre Amine verwendet werden. Die Menge dieser dem Bindemittel zugemischten Härter hängt von deren spezifischer Wirksamkeit ab und sollte den Bereich zwischen 0,05 bis 10 Gew.% bezogen auf das Bindemittel umfassen.

Im folgenden wird das Verhalten von gemäß der Erfindung aufgebauten Isolierbändern anhand der Tabellen 1 bis 4 näher erläutert:

Die Tabelle 1 zeigt für jeweils drei verschiedenen Mischungsverhältnisse die technischen Daten der aus Umsetzungsprodukten des Bisphenol A und den entsprechenden ringepoxidierten Epoxidharzen hergestellten Bindemittel, wobei in Spalte 1

A $\triangleq$ 3.4 Epoxicyclohexylmethyl-3.4.Epoxicyclohexancorboxylat

B $\triangleq$ Bis(3.4-epoxicyclohexylmethyl)adiapat

bedeutet.

Tabelle 1:

| Epoxid-harz | Gew. Teile Bisphenol A auf 100 Gew.T. Epoxidharz | Viskosität (mPas) des Umsetzungs-produktes bei 70 °C | Epoxidzahl des Umsetzungspro-duktes | Bezeichnung des Umsetzungs-produktes |
|---|---|---|---|---|
| A | 21 | ca. 5 000 | 0.43 | $A_1$ |
|  | 23 | ca. 10 000 | 0.40 | $A_2$ |
|  | 25 | ca. 18 000 | 0.38 | $A_3$ |
| B | 19 | ca. 4 000 | 0.26 | $B_1$ |
|  | 23 | ca. 15 000 | 0.21 | $B_2$ |
|  | 25 | ca. 20 000 | 0.21 | $B_3$ |

Aufgrund der hohen Klebkraft und der noch sehr guten Löslichkeit in der Tränkharz-Härter-Mischung bei 50 °C bis 70 °C wurden die Umsetzungsprodukte $A_3$ und $B_3$ für die weiteren Untersuchungen bevorzugt.

Die Tabelle 2 enthält eine Zusammmenstellung über die Lagerstabilität der in dünnen Schichten in einem offenen Gefäß gelagerten Mischungen dreier verschiedener Bindemittel-Beschleuniger-Mischungen.

Beschleuniger 1:
Additionsprodukt aus 1 Mol
Trimethylolpropantriacrylat (TMPT) und
3 Mol 1-Methylpiperazin.

Beschleuniger 2:
Additionsprodukt aus 1 Mol TMPT und
3 Mol 1-Ethylpiperazin.

Für die Untersuchungen wurden die Beschleuniger unter Erwärmen (bei 70 °C) oder mit Hilfe von MeCl$_2$ als Lösungsvermittler in den betreffenden Bindemittelharzen $A_3$ und $B_3$ gelöst.

In der Tabelle 2 enthält
die Spalte I       die Bindemittelbezeichnung,
die Spalte II      die Beschleunigerbezeichnung und

die Spalte III  die Gewichtsteile des Beschleunigers auf
100 Gewichtsteile des Bindemittels.

Tabelle 2:

| I | II | III | Viskosität (mPas) der Mischung bei 70 °C nach Lagerung bei 70 °C | | | | | |
|---|---|---|---|---|---|---|---|---|
| | | | AW. | 1 Wo. | 2 Wo. | 3 Wo. | 4 Wo | |
| $A_3$ | 1 | 10 | 13 000 | 90 000 | 310 000 | bei 70 °C nicht mehr meßbar, jedoch nicht geliert | | |
| $A_3$ | 2 | 15 | 10 000 | 14 500 | 19 000 | 29 000 | 33 000 | n. 10 Wo. ca. 300 000 |
| $B_3$ | 2 | 15 | 12 000 | 15 000 | 16 000 | 18 000 | 19 000 | n. 10 Wo. ca. 300 000 |

Im Vergleich zum Additionsprodukt aus 1 Mol Trimethylpropantriacrylat und 3 Mol 1-Methylpiperazin (Beschleuniger 1) zeigt das entsprechende Additionsprodukt aus 1-Ethylpiperazin im Temperaturbereich von ca. 70 °C die deutlich geringere katalytische Aktivität in bezug auf eine ionische Polymerisation des Bindemittelharzes.

Die Tabelle 3 zeigt die ausgezeichnete Beschleunigungswirkung der untersuchten Stoffe als Bindemittel-Beschleuniger-Mischung auf Epoxidharz-Säureanhydrid-Mischungen. Die Versuche sind mit einer Epoxidharz-Säureanhydrid-Mischung von einem Glycidylether des Bisphenol A (Epoxidäquivalent 174 ± 2) und MethylhexahydrophthaLsäureanhydrid durchgeführt.

In der Tabelle 3 zeigt

die Spalte I  die Bindemittel-Beschleuniger-Mischung,
die Spalte II  die Gewichtsteile der Bindemittel-Beschleuniger-Mischung
auf 100 Gewichtsteile Epoxidharz-Säureanhydrid.

Tabelle 3:

| I | II | Gelierzeit in Minuten der Epoxidharz-Säureanhydrid-Beschleuniger-Mischung | |
|---|---|---|---|
| | | 70 °C | 90 °C |
| $A_3$ 1 | 22 | 100 | 26 |
| $A_3$ 2 | 23 | 125 | 28 |
| $B_3$ 2 | 23 | 130 | 30 |

Obwohl das "1-Methylpiperazin-Addukt" im Vergleich zum "1-Ethyl-Piperazin-Addukt" auch hier die höhere Reaktivität zeigt, ist der Unterschied in der Beschleunigerwirkung auf das Tränkharzsystem geringer als bei der katalytischen Wirkung auf die entsprechenden Bindemittelsysteme (siehe Tabelle 2). Betrachtet man deshalb die beiden so wichtigen Eigenschaften, wie Lagerstabilität der Bindemittel-Beschleuniger-Mischung und Beschleunigerwirkung auf das Tränkharzsystem insgesamt, dann zeigt vor allem das 1-Ethyl-Piperazin-Addukt die gewünschten Eigenschaften.

Die Tabelle 4 enthält Angaben über die Lagerstabilität von Bindemittel-Beschleuniger-Mischungen, bestehend aus 10 Gewichtsteilen Beschleuniger 2 (Additionsprodukt aus 1 Mol TMPT und 3 Mol 1-Ethylpiperazin) auf 100 Gewichtsteile Bindemittel $A_3$ (siehe Tabelle 1), denen als Beimengung zwei spezifische Härter, nämlich

1 = 2Phenyl-4.5 Dihydroxymethylimidazol oder
2 = 1Cyanoethyl-2- Phenylimidazol-Trimellitat

zugefügt wurden.

In dieser Tabelle 4 zeigt
die Spalte I    die verwendeten Härter und
die Spalte II    die Gewichtsteile Härter auf 100 Gewichtsteile Bindemittel.

Tabelle 4:

| I | II | Lagerstabilität der Mischungen in Tagen bei | | Gelierzeit bei 130 °C (h) |
|---|----|-----|------|------|
| | | RT | 70 °C | |
| 1 | 3 | 150 | 10 | ca. 16 |
| 2 | 3 | 150 | 8 | ca. 12 |

Auch hier geht deutlich eine bis zum Temperaturbereich von 70 °C geringe Reaktivität der Beimengungen auf die Bindemittel-Beschleuniger-Mischung hervor. Der Vergleich mit Tabelle 2 zeigt für diesen Temperaturbereich eine insgesamt etwas höher Reaktivität, doch ist bei Raumtemperatur auch hier die ausgezeichnete Stabilität der Mischungen gegeben.

Durch die mit Hilfe der Beimengungen erreichbare Erhöhung des Glaspunktes des gehärteten Bindemittels um ca. 30 °C wird die Steifigkeit der aus den Bändern gewickelten Isolierhülse weiter erhöht und deren mechanische Festigkeit bei hohen Temperaturen weiter gesteigert.

Zur weiteren Erläuterung der Erfindung ist in Figur 1 und 2 der Zeichnung ein gemäß der Erfindung hergestelltes Isolierband als Ausführungsbeispiel schematisch dargestellt. Die Figur 3 der Zeichnung zeigt die Steifigkeit von aus dem Isolierband gewickelten, imprägnierten und ausgehärteten Isolierhülsen als Funktion der Temperatur.

Das Isolierband 1 besteht aus einer flexiblen Unterlage 2, einem Glasseidengewebe, das als Träger dient. Dazu können aber auch Kunstfaservliese, Kunstfasergewebe oder auch Kunststoffolien, insbesondere hoher Wärmefestigkeit, verwendet werden.

Auf die Unterlage 2 ist die Schicht aus Glimmerplättchen 3 aufgebracht. Zur Verklebung der Unterlage 2 mit der Schicht 3 dient ein beschleunigerhaltiges Bindemittel bestehend aus dem Bindemittel $A_3$ (siehe Tabelle 1) und dem Adduktionsprodukt aus 1 Mol TMPT und 3 Mol 1-Ethylpiperazin als Beschleuniger. Als Schicht 3 können statt der dargestellten Glimmerplättchen auch Glimmerpapier oder Glasflocken mit Hilfe des beschleunigerhaltigen Bindemittels auf die Unterlage 2 aufgebracht werden. Die Schicht 3 ist durch eine Decklage 4 abgeschlossen, für die mit der Unterlage 2 identische, aber ohne weiteres auch andere flexible Materialien eingesetzt werden können. Ein so hergestelltes Isolierband 1 ist mehr als drei Monate bei 25 °C lagerfähig.

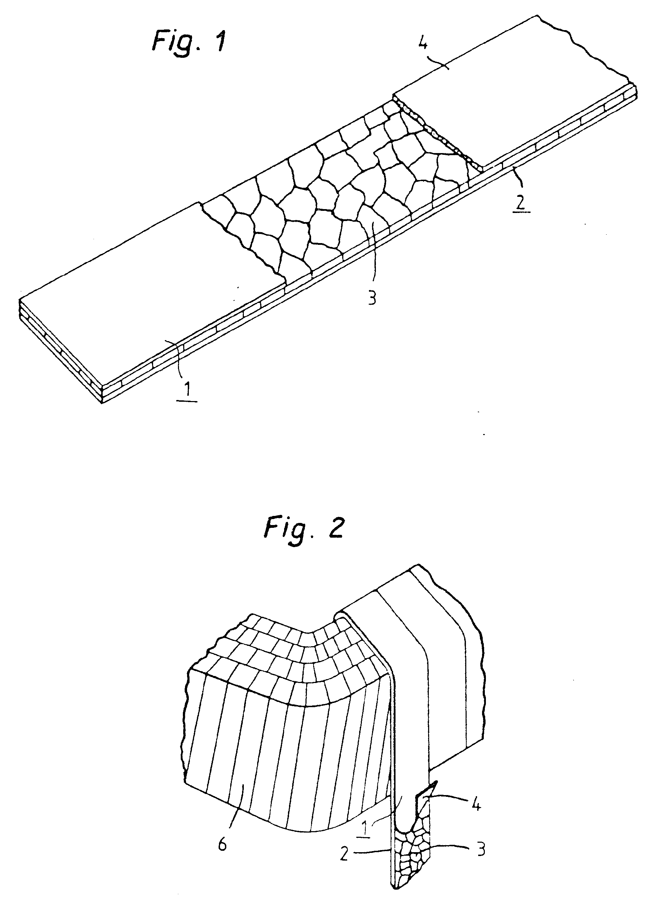

Zur Herstellung der Isolierhülse 5 wird dann der Leiter einer elektrischen Maschine z. B. ein Wicklungsstab oder, wie dargestellt, die Spule 6, die nur mit der Teilleiterisolierung versehen ist, mit dem Isolierband 1, wie es in Figur 2 angedeutet ist, überlappt bewickelt. Die Umwicklung erfolgt in mehreren Lagen bis die gewünschte Stärke der Isolierhülse 5 erreicht ist. Die Spule 6 mit der Isolierhülse 5 wird dann nach der VPI-Technik mit einer Epoxidharz-Säureanhydridhärter-Mischung imprägniert und anschließend ausgehärtet.

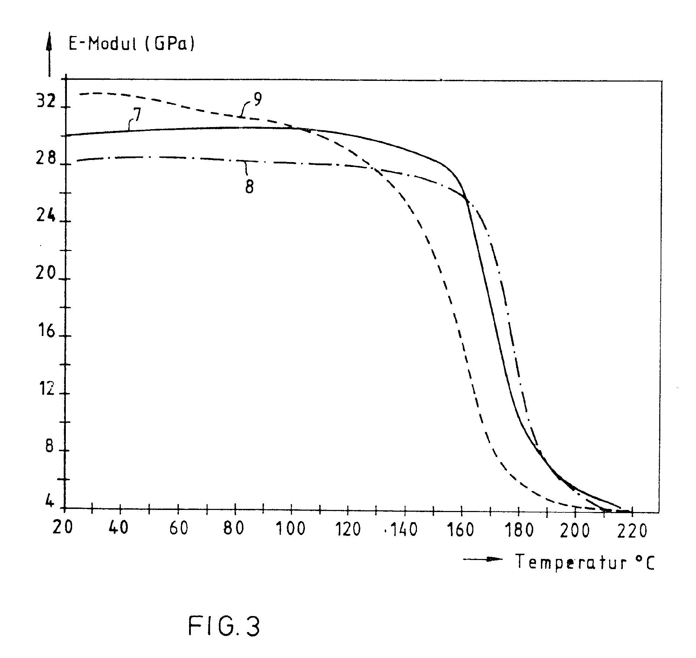

Zur Untersuchung der in Figur 3 dargestellten mechanischen Steifigkeit einer Isolierhülse 5 in Abhängigkeit von der Temperatur wurde ein Probekörper ca. 2 mm dick, d. h. mit 12 Lagen aus 100µ starkem Glimmerpapier kaschiert mit einem Glasseidegewebe von einem Flächengewicht von ca. 28 g/cm², umwickelt und mit einem Bisphenol A-Epoxidharz-Methylhexahydrophthalsäureanhydrid-Tränkharzgemisch bei ca. 70 °C imprägniert. Die Aushärtung dauerte 24 Stunden bei 140 °C.

Auf der Abzisse der Figur 3 ist die Temperatur in °C und auf der Ordinate ist die mechanische Steifigkeit, d. h. der E-Modul, in Gigapascal (GPa) eingetragen.

Der Kurvenzug 7 zeigt die Steifigkeit einer Isolierhülse, die aus einem aus der DE-PS-21 42 571 bekannten Glimmerband gewickelt ist.

Die Kurvenzüge 8 und 9 zeigen die Steifigkeit von Isolierhülsen gewickelt aus Glimmerbändern mit Bindemittel-Beschleuniger-Mischungen entsprechend der vorliegenden Erfindung. Die Isolierhülse für den Kurvenzug 8, enthielt das Bindemittel $A_3$ (siehe Tabelle 1) und die Isolierhülse für den Kurvenzug 9 das Bindemittel $B_3$. Als Beschleuniger wurde in beiden Fällen das Additionsprodukt ais 1 Mol TMPT und 3 Mol 1-Ethylpiperazin eingesetzt.

Erwartungsgemäß zeigen die Kurvenzüge 7 und 8 eine hohe Wärmeformbeständigkeit der entsprechenden Isolierhülsen, während im Kurvenzug 9, bedingt durch den flexibilisierend wirkenden Adipinsäurerest des Bindemittelharzes dieses hohe Niveau nicht ganz erreicht wird.

## Patentansprüche

1. Isolierband zur Herstellung einer mit einer heißhärtenden Epoxidharz-Säureanhydrid-Mischung imprägnierten Isolierhülse für elektrische Leiter, insbesondere für die Wicklungsstäbe bzw. Spulen elektrischer Maschinen, bestehend aus auf eine flexible Unterlage aufgebrachtem, flächigem, durchschlagfestem anorganischem Material, wie z. B. Glimmerplättchen oder Feinglimmerschichten, das mit der Unterlage und miteinander und gegebenenfalls mit einer abschließenden Decklage mittels eines Bindemittels verklebt ist, das einen die Härtungsreaktion des Tränkharzgemisches anregenden Beschleuniger enthält, wobei die Bindemittel-Beschleuniger-Mischung ein bei der Aushärtetemperatur des Tränkharzes selbsthärtendes System bildet, **dadurch gekennzeichnet,** daß als Bindemittel ein ringepoxidiertes, durch Molekülvergrößerung modifiziertes, cycloaliphatisches Epoxidharz mit einem Epoxidäquivalent größer als 200 und als Beschleuniger Addukte aus 1-Ethyl-piperazin oder 1-Methyl-piperazin an (Meth)acrylatverbindungen verwendet werden.

2. Isolierband nach Anspruch 1, **dadurch gekennzeichnet,** daß als Bindemittel durch Molekülvergrößerung zu einem Epoxidäquivalent größer als 200 modifiziertes 3.4-Epoxicyclohexylmethyl-(3.4 Epoxi)cyclohexancarboxylat verwendet ist.

3. Isolierband nach Anspruch 1, **dadurch gekennzeichnet,** daß als Bindemittel durch Molekülvergrößerung zu einem Epoxidäquivalent größer als 300 modifiziertes Bis(3.4-epoxicyclohexylmethxyl)adipat verwendet ist.

4. Isolierband nach Anspruch 1 oder 2 oder 3, **dadurch gekennzeichnet,** daß die Molekülvergrößerung des Bindemittels durch Umsetzung mit Bisphenol A nach dem Avancementverfahren erfolgt.

5. Isolierband nach einem der Ansprüche 1 bis 4, **dadurch gekennzeichnet,** daß als Beschleuniger das Umsetzungsprodukt aus 1 Mol Trimethylolpropantriacrylat und 3 Mol 1-Ethyl-Piperazin verwendet ist.

6. Isolierband nach einem der Ansprüche 1 bis 5, **dadurch gekennzeichnet,** daß als Beschleuniger das Umsetzprodukt aus 1 Mol Trimethylolpropantriacrylat und 3 Mol 1-Methyl-Piperazin verwendet ist.

7. Isolierband nach einem der Ansprüche 1 bis 6 , **dadurch gekennzeichnet,** daß die Bindemittel-Beschleuniger-Mischung als Härter wirksame Beimengungen enthält, die erst bei den Aushärtetemperaturen der heißhärtenden Epoxidharz-Säureanhydrid-Mischung wirksam werden.

8. Isolierband nach Anspruch 7, **dadurch gekennzeichnet,** daß der Bindemittel-Beschleuniger-Mischung als Beimengung 2-Phenyl-4.5 Dihydroymethylimidazol beigemischt ist.

9. Isolierband nach Anspruch 7, **dadurch gekennzeichnet,** daß der Bindemittel-Beschleuniger-Mischung 1-Cyanoethyl-2-Methylimidazol-Trimellitat beigemischt ist.

**10.** Isolierband nach einem der Ansprüche 1 bis 9, **dadurch gekennzeichnet,** daß der Gewichtsanteil des Bindemittels zwischen 3 bis 20 % des Gesamtgewichts des Isolierbandes beträgt.

**11.** Isolierband nach einem der Ansprüche 1 bis 10, **dadurch gekennzeichnet,** daß der Gewichtsanteil des Beschleunigers angenähert 0.05 bis 3 % des Gesamtgewichtes des Isolierbandes beträgt.

**12.** Isolierband nach einem der Ansprüche 7 bis 9, **dadurch gekennzeichnet,** daß die der Bindemittel-Beschleuniger-Mischung als Beimengungen zugemischten Härter einen Gewichtsanteil von 0.05 bis 10 Gew.% bezogen auf das Gesamtgewicht des Bindemittels aufweisen.

## Claims

**1.** Insulating tape for the production of an insulating sheath impregnated with a heat-hardening epoxy resin-acid anhydride mixture for electrical conductors, in particular for the winding bars or coils of electrical machines, consisting of inorganic material which is two-dimensional, resistant to breakdown and is applied to a flexible base, an inorganic material such as, for example, mica platelets or layers of fine mica, which inorganic material is bonded with the base, and together, and if necessary with a sealing cover layer by means of a bonding agent, and contains an accelerating agent which activates the hardening reaction of the impregnating resin mix, whereby the bonding agent-accelerating agent mixture forms a system which self-hardens at the hardening temperature of the impregnating resin, characterised in that a ring-epoxidised, cycloaliphatic epoxy resin modified by molecule enlargement and having an epoxy equivalent greater than 200 is used as bonding agent, and adducts of a 1-ethyl piperazine or 1-methyl-piperazine and (meth)acrylate compounds are used as accelerating agent.

**2.** Insulating tape according to claim 1, characterised in that 3,4-epoxy cyclohexylmethyl-(3,4 epoxy) cyclohexane carboxylate modified by molecule enlargement to an epoxy equivalent greater than 200 is used as bonding agent.

**3.** Insulating tape according to claim 1, characterised in that bis(3,4-epoxy cyclohexylmethyl) adipate modified by molecule enlargement to an epoxy equivalent greater than 300 is used as bonding agent.

**4.** Insulating tape according to claim 1 or 2 or 3, characterised in that the molecule enlargement of the bonding agent occurs by reaction with bisphenol according to the advancement procedure.

**5.** Insulating tape according to one of claims 1 to 4, characterised in that the reaction product of 1 mole trimethylol propane triacrylate and 3 moles 1-ethylpiperazine is used as accelerating agent.

**6.** Insulating tape according to one of claims 1 to 5, characterised in that the reaction product of 1 mole trimethylol propane triacrylate and 3 moles 1-methylpiperazine is used as accelerating agent.

**7.** Insulating tape according to one of claims 1 to 6, characterised in that the bonding agent-accelerating agent mixture contains additives active as hardeners which do not become active until at the hardening temperatures of the heat-hardening epoxy resin-acid anhydride mixture.

**8.** Insulating tape according to claim 7, characterised in that 2-phenyl-4,5 dihydroxymethylimidazole is added as additive to the bonding agent-accelerating agent mixture.

**9.** Insulating tape according to claim 7, characterised in that 1-cyanoethyl-2-methylimidazole-trimellitate is added to the bonding agent-accelerating agent mixture.

**10.** Insulating tape according to one of claims 1 to 9, characterised in that the part by weight of the bonding agent amounts to between 3 and 20% of the total weight of the insulating tape.

**11.** Insulating tape according to one of claims 1 to 10, characterised in that the part by weight of the accelerating agent amounts to approximately 0.05 to 3% of the total weight of the insulating tape.

**12.** Insulating tape according to one of claims 7 to 9, characterised in that the hardeners added as additives to the bonding agent-accelerating agent mixture have a part by weight of 0.05 to 10% by weight relative to the total weight of the bonding agent.

## Revendications

1. Bande isolante pour la fabrication d'une gaine isolante imprégnée d'un mélange thermodurcissable de résine époxyde et d'anhydride d'acide pour conducteurs électriques, notamment pour les barreaux d'enroulement ou les bobines de machines électriques, constituée d'une matière minérale plate, résistant au claquage et déposée sur un support souple, comme par exemple des feuilles de mica ou de minces couches de mica, qui sont collées au support et entre elles et, le cas échéant, à une couche de finition au moyen d'un liant contenant un accélérateur excitant la réaction de durcissement du mélange de résines d'imprégnation, le mélange de liant et d'accélérateur formant un système autodurcissant à la température de durcissement de la résine d'imprégnation, caractérisée en ce que sont utilisés, comme liant, une résine époxyde cycloaliphatique, époxydée sur le cycle, modifiée par agrandissement de la molécule et ayant un équivalent en époxyde supérieur à 200 et, comme accélérateur, des adduits constitués de 1-éthyl-pipérazine ou de 1-méthyl-pipérazine et d'acrylates ou de méthacrylates.

2. Bande isolante suivant la revendication 1, caractérisée en ce qu'est utilisé comme liant du 3,4-époxycyclohexanecarboxylate de (3,4-époxy)-cyclohexylméthyle modifié par agrandissement de la molécule jusqu'à un équivalent en époxyde supérieur à 200.

3. Bande isolante suivant la revendication 1, caractérisée en ce qu'est utilisé comme liant de l'adipate de bis(3,4-opoxycyclohexylméthyle) modifié par agrandissement de la molécule jusqu'à un équivalent en époxyde supérieur à 300.

4. Bande isolante suivant la revendication 1 ou 2 ou 3, caractérisée en ce que l'agrandissement de la molécule du liant est effectué par réaction sur du bisphénol A suivant le procédé d'avancement.

5. Bande isolante suivant l'une des revendications 1 à 4, caractérisée en ce qu'est utilisé comme accélérateur le produit de réaction de 1 mole de triacrylate de triméthylolpropane et de 3 moles de 1-éthyl-pipérazine.

6. Bande isolante suivant l'une des revendications 1 à 5, caractérisée en ce qu'est utilisé comme accélérateur le produit de réaction de 1 mole de triacrylate de triméthylolpropane et de 3 moles de 1-méthyl-pipérazine.

7. Bande isolante suivant l'une des revendications 1 à 6, caractérisée en ce que le mélange de liant et d'accélérateur contient comme durcisseur des constituants qui ne sont efficaces qu'aux températures de durcissement du mélange thermodurcissable de résine époxyde et d'anhydride d'acide.

8. Bande isolante suivant la revendication 7, caractérisée en ce que le mélange de liant et d'accélérateur est additionné de 2-phényl-4,5-dihydroxyméthylimidazole.

9. Bande isolante suivant la revendication 7, caractérisée en ce que le mélange de liant et d'accélérateur est additionné de trilmellitate de 1-cyanoéthyl-2-méthylimidazole.

10. Bande isolante suivant l'une des revendications 1 à 9, caractérisée en ce que le liant représente de 3 à 20 % du poids total de la bande isolante.

11. Bande isolante suivant l'une des revendications 1 à 10, caractérisée en ce que l'accélérateur représente à peu près de 0,05 à 3 % du poids total de la bande isolante.

12. Bande isolante suivant l'une des revendications 7 à 9, caractérisée en ce que les durcisseurs ajoutés au mélange de liant et d'accélérateur représentent de 0,05 à 10 % du poids total du liant.

## Fig. 1

## Fig. 2

FIG. 3